# EUROPEAN PATENT SPECIFICATION

(11) **EP 1 114 711 B1**
(45) Date of publication and mention of the grant of the patent: **08.11.2006**
(21) Application number: 00310782.8
(22) Date of filing: 05.12.2000
(51) Int. Cl.: B29C 49/20, B62D 3/12

(54) **Method of securing by blow moulding a connector element to a flexible bellow and flexible bellow with a connector element**
Verfahren zum Anbringen eines Verbindungsstückes an einem flexiblen Balg durch Blasformen und flexibler Balg mit einem Verbindungsstück
Méthode pour fixer par moulage-soufflage un élément de connection à un soufflet flexible et soufflet flexible avec un élément de connection

(30) Priority: 05.01.2000 GB 102
(43) Date of publication of application: 11.07.2001
(73) Proprietor: Trelleborg AB (publ), 231 Trelleborg (SE)
(72) Inventor: Houis, Jaques, 44470 Thouare-sur-Loire (FR); Boyen, Remi, 44300 Nantes (FR); Lelievre, Yann, 44450 La Chapelle-Basse-Mer (FR)
(74) Representative: Foster, David Martyn

(56) References cited:
- US-A- 4 515 842
- US-A- 5 236 204
- PATENT ABSTRACTS OF JAPAN vol. 1995, no. 01, 28 February 1995 (1995-02-28) & JP 06 285963 A (TSUCHIYA MFG CO LTD), 11 October 1994 (1994-10-11)
- PATENT ABSTRACTS OF JAPAN vol. 009, no. 067 (M-366), 27 March 1985 (1985-03-27) & JP 59 199219 A (EKUSERU KK), 12 November 1984 (1984-11-12)
- DATABASE WPI Section Ch, Week 197648 Derwent Publications Ltd., London, GB; Class A32, AN 1976-90169X XP002165328 & SU 504 662 A (SANITATION TECH RES), 26 April 1976 (1976-04-26)

## Description

The invention relates to blow-moulded articles and blow-moulding methods for producing them. Articles embodying the invention and to be described in more detail below are bellows arrangements for protecting moving parts in the mechanism of motor vehicles.

JP-06285963 discloses a blow-moulded bellows to which a pipe is attached during moulding by the use of a linking groove, with the pipe closed at one end during the moulding process.

According to the invention, there is provided a flexible bellows arrangement formed from a parison or preform of thermoplastics material and having a wall and an opening in said wall and a connector element communicating with said opening to enable a connection to be made to the interior of the bellows through said wall, characterised in that the connector element is secured in position by a portion of blow-moulded material of the parison or preform which has entered the hollow passage of the connector element during the blow-moulding of the parison or perform to weld and seal the material of the parison or preform to the material of the connector element and to form said opening.

According to the invention, there is further provided a method of securing a connector element to the wall of a flexible bellows made of thermoplastic material comprising the steps of separately producing the connector element having a passage therethrough, placing the connector element in a mould, inserting a parison or preform with the mould, blowing the parison or preform to form the bellows, and so that a portion of material of the parison or preform enters the passage of the connector element and so that an aperture is formed in the wall of the parison or preform communicating with said passage to enable a connection to be made to the interior of the bellows through said wall characterised in that the connector element has the passage open during blowing and the step of blowing the parison or preform includes blowing through the passage of the connector element to form said aperture to weld and secure the connector element to the bellows.

In embodiments of the invention to be described, therefore, connector elements can easily be sealingly welded to products such as bellows made by extrusion blow-moulding or injection blow-moulding.

Bellows arrangements embodying the invention will now be described, by way of example only, with reference to the accompanying diagrammatic drawings in which:
Figure 1 is a cross-section through one of the bellows arrangements;
Figure 2 is an enlarged view of the portion of Figure 1 shown at II; and
Figure 3 is an end view of part of a connector shown in Figure 2, looking in the direction of the arrow III.

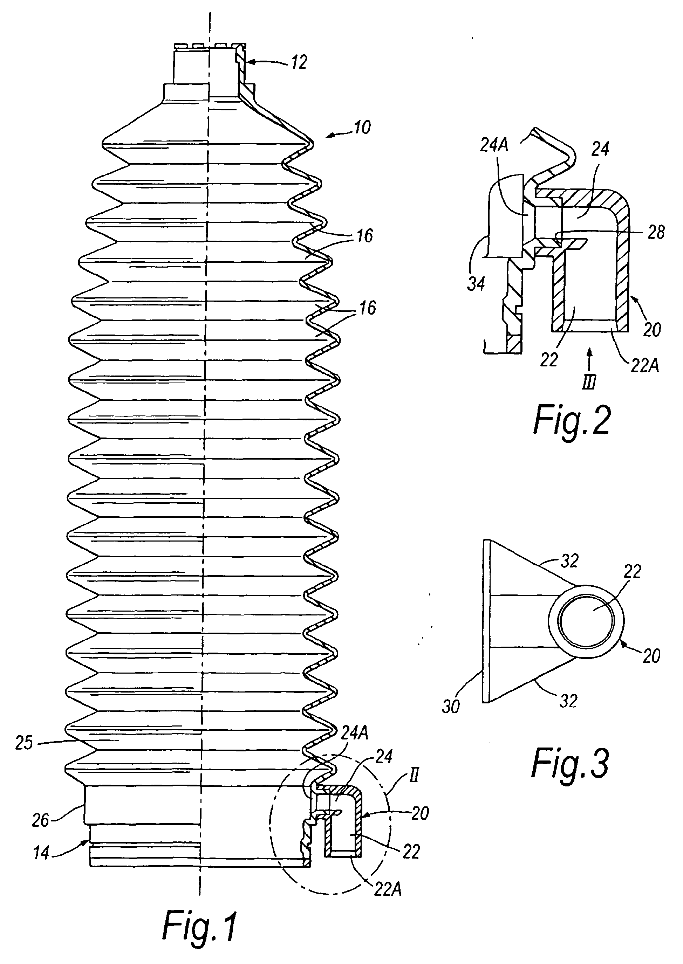

The bellows arrangement 10 shown in Figures 1 and 2 comprises a small diameter fixing collar 12 at one end and a larger diameter fixing collar 14 at the opposite end, with a plurality of bellows turns 16 integrally extending between the two collars. In use, the fixing collars 12 and 14 are used to attach the bellows to two relatively movable parts of a mechanism (not shown) which is to be protected in a motor vehicle. The collars 12 and 14 may be fixed to different parts of the mechanism by suitable circumferentially extending clamping rings. The bellows protects the mechanism from ingress of water, dirt and other contamination.

In one particular application of the bellows 10, two of them are respectively mounted to protect the ends of a steering rack of the steering mechanism on the vehicle. Thus, the steering mechanism may comprise a steering box operated directly by the driver's steering wheel or through the intermediary of a power steering arrangement. A steering rack extends outwardly in opposite directions from each side of the steering box and is moved axially in one or the other direction by the steering box, in response to steering action by the driver, the opposite ends of the rack being connected to turn the steerable wheels of the vehicle. In use, a bellows 10 extends from one side of the steering box, with its larger diameter fixing collar 14 being secured to the steering box where the steering rack extends outwardly therefrom. The smaller diameter collar 12 of the bellows 10 is secured to the distal end of the rack.

At the opposite side of the steering box, from which the second end of the rack protrudes, a second bellows 10 is secured, with its smaller diameter collar 12 fixed to that distal end of the steering rack.

The two bellows 10 thus protect the two end portions of the rack and flexibly accommodate the axial movement of the bellows.

As the rack moves to and fro, in order to carry out desired steering action, the two bellows 10 will be alternately compressed and expanded. It is therefore necessary to accommodate the resultant changes in pressure in the two bellows. If this is not done, excessive pressure may rupture the bellows. In order to deal with this problem, it is known to interconnect the interiors of the two bellows. In this way, when one bellows is contracted by movement of the rack, the increased pressure within the bellows is transmitted to the interior of the other bellows which will at the same time be expanded.

In accordance with a feature of the bellows being described, this interconnection between the two bellows at opposite ends of the steering rack is implemented by means of an interconnection tube (not shown) which extends sealingly between two connectors, of which one is shown at 20 in Figures 1 and 2. The connector 20 is L-shaped in form, comprising a relatively long hollow tubular part 22 and a relatively short hollow tubular part 24. Each part 22,24 has an open end 22A,24A. As shown in Figures 1 and 2, the connector 20 is secured in position on the bellows 10 so that the end 24A is attached to the wall of the bellows adjacent the larger diameter collar 14 and with the hollow interior of the portion 24 thus open to the interior 25 of the bellows. The portion 24 of the connector 20 thus extends radially of the axis of the bellows and the portion 22 of the connector extends in an axial direction.

The connector 20 of the bellows 10 at the other end (not shown) of the steering rack is mounted similarly on that bellows, and the two ends 22A of the connectors are interconnected by the interconnection tube (not shown) which is preferably rigid and fits inside the hollow tubular parts 22 of the connectors 20 of the two bellows.

The bellows of the form shown in the Figures need to be produced in large quantities using mass-production techniques. A usual way of producing the bellows is by a blow-moulding technique using thermoplastic material. A parison or preform of thermoplastic material in a suitable mould is blown to produce the bellows (for simplicity, the term "parison" will be used alone in the following description but is intended to include "preform" where injection blow-moulding is used). It is desirable that the connector 20 be secured to the bellows 10 in an efficient manner, necessitating the minimum number of operations. In accordance with a feature of the bellows being described, the connector 20 is separately produced, such as from relatively stiff thermoplastics material by a suitable moulding operation. It is then placed in the mould which is used for blow-moulding the bellows 10. The parison of thermoplastics material is formed in the interior of this mould and then blown internally to produce the form of the bellows. This blowing action blows the material of the parison into the end 24A of the portion 24 of the connector 20 and thus sealingly secures the parison to the connector 20 by welding the material of the parison to the material of the connector 20. Simultaneously, a hole is formed through a circular wall portion 26 of the parison by the blowing operation which thus connects the interior 25 of the bellows to the interior of the connector 20, all as shown in Figure 2.

The connector 20 is very firmly secured to the parison. The welding operation forms a very strong welded bond between the material of the connector 20 and the material of the parison. In addition, a mechanical bond is formed between the connector and the parison by the material of the parison where it enters the end 24A of the connector 20.

The arrangement described and illustrated herein is therefore advantageous over known arrangements in which connectors similar to the connector 20 are mounted on the bellows by a glueing operation, which is complex, requiring several different operations including the formation of a hole through the wall of the bellows. The arrangement described and illustrated herein is also advantageous over arrangements in which the connector 20 is moulded integrally with the bellows. Such arrangements are complex because it is necessary to carry out a separate operation to form a hole through the wall of the bellows. In the arrangement described and illustrated herein, the only condition that the materials of the tubular part 24 and the parison have to satisfy is chemical compatibility. This enables various modifications to be easily made. For example, the connector 20 could be relatively stiff, and the interconnection tube (for connecting the connectors 20 of the two bellows) could be flexible. However, other modifications are also possible.

The arrangement illustrated is advantageous in that the connector 20 can be very precisely located relative to the wall of the bellows, because it is positioned within the mould itself, or it can be very precisely located relative to the blown part of the wall of the bellows in the case where the bellows is only partially blown.

As shown in Figure 2, the end 24A of the connector portion 24 can be formed with a circular recess 28 for receiving the material of the parison as it is blown into the end 24A.

Figure 3 shows an end view of the connector 20, viewed in the direction of the arrow III of Figure 2, before it is positioned in the mould. It has a base 30 and ribs 32,32 which support the tubular parts 22,24. The blowing operation which blows the parison into the form of the bellows is thus arranged to produce a small flat area in the generally circular wall portion 26. The base 30 (Figure 3) of the connector 20 is received on the outside of this flat area. On the inside of the bellows, the inside surface of this flat area merges into the inside of the circular wall portion 26 as shown at 34 (in Figure 2 but not in Figure 1).

It will be appreciated that the connector 20 can be situated at any desired position on the external wall of the bellows. The connector 20 can have any desired rigidity.

## Claims

1. A method of securing a connector element (20) to the wall (26) of a flexible bellows (10) made of thermoplastic material comprising the steps of separately producing the connector element (20) having a passage therethrough, placing the connector element (20) in a mould, inserting a parison or preform with the mould, blowing the parison or preform to form the bellows, and so that a portion of material of the parison or preform enters the passage of the connector element (20) and so that an aperture is formed in the wall (10) of the parison or preform communicating with said passage to enable a connection to be made to the interior of the bellows through said wall (26) **characterised in that** the connector element (20) has the passage open during blowing and the step of blowing the parison or preform includes blowing through the passage of the connector element (10) to form said aperture to weld and secure the connector element (10) to the bellows.

2. A method according to claim 1, including the step of producing a formation in the connector element (20) at its opening for receiving the blown material of the parison or preform.

3. A flexible bellows arrangement (10) formed from a parison or preform of thermoplastics material and having a wall (26) and an opening in said wall (26) and a connector element (20) communicating with said opening to enable a connection to be made to the interior of the bellows through said wall (26), **characterised in that** the connector element (20) is secured in position by a portion of blow-moulded material of the parison or preform which has entered the hollow passage of the connector element (20) during the blow-moulding of the parison or preform to weld and seal the material of the parison or preform to the material of the connector element (20) and to form said opening.

4. A bellows arrangement according to claim 3, in which the connector element (20) is of hollow tubular form.

5. A bellows arrangement according to claim 4, in which the connector element (20) comprises a first hollow tubular portion (24) extending generally radially of the bellows (10) and a second integral hollow tubular portion (22) extending parallel to the axis of the bellows (10).

6. A bellows arrangement according to any one of claims 3 to 5, in combination with a second bellows arrangement (10) according to any one of claims 1 to 4, the interiors (25) of the two bellows arrangements (10) being connected together by means of their connector elements (20).

## Patentansprüche

1. Ein Verfahren zum Befestigen eines Verbindungselements (20) an der Wand (26) eines flexiblen Balgs (10), der aus einem thermoplastischen Material hergestellt ist, die Schritte des separaten Herstellens des Verbindungselements (20), das einen Durchgang aufweist, des Positionierens des Verbindungselements (20) in einer Form, des Einsetzens eines Schlauchs oder einer Vorform mit der Form, des Blasens des Schlauchs oder der Vorform, um den Balg zu bilden, umfassend, und so dass ein Teil des Materials des Schlauchs oder der Vorform in den Durchgang des Verbindungselements (20) eindringt und so dass eine Öffnung in der Wand (10) des Schlauchs oder der Vorform gebildet wird, die mit dem genannten Durchgang In Verbindung steht, um zu ermöglichen, dass eine Verbindung mit dem Inneren des Balgs durch die genannte Wand (26) hergestellt wird, **dadurch gekennzeichnet, dass** das Verbindungselement (20) während des Blasens den Durchgang geöffnet hat und der Schritt des Blasens des Schlauchs oder der Vorform Blasen durch den Durchgang des Verbindungselements (20), um die genannte Öffnung auszubilden, einschließt, um das Verbindungselement (20) an den Balg zu schweißen und zu befestigen.

2. Ein Verfahren gemäß Anspruch 1, den Schritt des Herstellens einer Struktur in dem Verbindungselement (20) an seiner Öffnung zum Aufnehmen des geblasenen Materials des Schlauchs oder der Vorform einschließend.

3. Eine flexible Balgeinrichtung (10), die aus einem Schlauch oder einer Vorform aus einem thermoplastischen Material gebildet Ist, und eine Wand (26) und eine Öffnung in der genannten Wand (26) und ein Verbindungselement (20), das mit der genannten Öffnung in Verbindung steht, um zu ermöglichen, dass eine Verbindung mit dem inneren des Balgs durch die genannte Wand (26) hergestellt wird, aufweisend, **dadurch gekennzeichnet, dass** das Verbindungselement (20) durch einen Teil von blasgeformtem Material des Schlauchs oder der Vorform am Ort befestigt wird, der in den hohlen Durchgang des Verbindungselements (20) während des Blasformens des Schlauchs oder der Vorform eingedrungen ist, um das Material des Schlauchs oder der Vorform mit dem Material des Verbindungselements (20) zu verschweißen und zu versiegeln und die genannte Öffnung auszubilden.

4. Eine Balgeinrichtung gemäß Anspruch 3, in der das Verbindungselement (20) von einer hohlen röhrenförmigen Form ist.

5. Eine Balgeinrichtung gemäß Anspruch 4, in der das Verbindungselement (20) einen ersten hohlen röhrenförmigen Teilbereich (24), der sich allgemein radial zu dem Balg (10) erstreckt, und einen zweiten integralen hohlen röhrenförmigen Teilbereich (22), der sich parallel zu der Achse des Balgs (10) erstreckt, umfasst.

6. Eine Balgeinrichtung gemäß einem der Ansprüche 3 bis 5 in Kombination mit einer zweiten Balgeinrichtung (10) gemäß einem der Ansprüche 1 bis 4, wobei die Innenraume (25) der zwei Balgeinrichtungen (10) mittels ihrer Verbindungselemente (20) miteinander verbunden sind.

## Revendications

1. Procédé de fixation d'un élément de connexion (20) à la paroi (26) d'un soufflet flexible (10) fabriqué en matériau thermoplastique comprenant les étapes de production séparée de l'élément: de connexion (20) présentant un passage à travers celui-ci, de placement de l'élément de connexion (20) dans un moule, d'insertion d'une paraison ou préforme avec le moule, de soufflage de la paraison ou préforme pour former le soufflet, et de sorte qu'une partie du matériau de la paraison ou préforme pénètre dans le passage de l'élément de connexion (20) et de sorte qu'une ouverture soit formée dans la paroi (10) de la paraison ou préforme communiquant avec ledit passage pour permettre de réaliser une connexion à l'intérieur du soufflet à travers ladite paroi (26), **caractérisé en ce que** l'élément de connexion (20) présente le passage ouvert pendant le soufflage et l'étape de soufflage de la paraison ou préforme inclut le soufflage à travers le passage de l'élément de connexion (10) pour former ladite ouverture pour souder et fixer l'élément de connexion (10) sur le soufflet.

2. Procédé selon la revendication 1, comportant l'étape de production d'une formation dans l'élément de connexion (20) au niveau de son ouverture pour recevoir le matériau soufflé de la paraison ou préforme.

3. Agencement de soufflet flexible (10) formé à partir d'une paraison ou préforme en matériau thermoplastique et présentant une paroi (26) et une ouverture dans ladite paroi (26) et un élément de connexion (20) communiquant avec ladite ouverture pour permettre de réaliser une connexion sur l'intérieur du soufflet à travers ladite paroi (26), **caractérisé en ce que** l'élément de connexion (20) est fixé en position par une partie du matériau moulé-soufflé de la paraison ou préforme qui a pénétré dans le passage creux de l'élément de connexion (20) pendant le moulage-soufflage de la paraison ou préforme pour souder et sceller le matériau de la paraison ou préforme sur le matériau de l'élément de connexion (20) et pour former ladite ouverture.

4. Agencement de soufflet selon la revendication 3, dans lequel l'élément de connexion (20) est de forme tubulaire creuse.

5. Agencement de soufflet selon la revendication 4, dans lequel l'élément de connexion (20) comprend une première partie tubulaire creuse (24) s'étendant généralement dans le sens radial par rapport au soufflet (10) et une seconde partie tubulaire creuse intégrale (22) s'étendant parallèlement à l'axe du soufflet (10).

6. Agencement de soufflet selon l'une quelconque des revendications 3 à 5, en combinaison avec un second agencement de soufflet (10) selon l'une quelconque des revendications 1 à 4, les parties intérieures (25) des deux agencements de soufflet (10) étant raccordées les unes aux autres au moyen de leurs éléments de connexion (20).
